# EUROPEAN PATENT APPLICATION

(11) **EP 1 087 484 A1**
(43) Date of publication of application: **28.03.2001**
(21) Application number: 00308397.9
(22) Date of filing: 25.09.2000
(51) Int. Cl.: H02G 3/04

(54) **Supporting means for cables**

(30) Priority: 24.09.1999 GB 9922707
(71) Applicant: Du Gay, Robert Graham, Ewshot Farnham, Surrey GU10 5BW (GB)
(72) Inventor: Du Gay, Robert Graham, Ewshot Farnham, Surrey GU10 5BW (GB)
(74) Representative: Everitt, Christopher James Wilders

(57) **Abstract**

A cable ladder support system 10 for supporting cables, pipes, ducting or any other such conduit, comprising two side rails 12,14 arranged substantially in parallel and a plurality of rungs 16 situated in-between the side rails 12,14 and substantially at right angles to them so as to extend from one side rail 12 to the other 14, wherein the rungs 16 are attached to the side rails 12,14 by means of a spigot 18 and socket arrangement, each of the spigot 18 and socket having a similar polygonal cross section, the socket being fitted with a collar 22 of a resiliently deformable material in which the spigot 18 is an interference fit and the collar 22 comprising a plurality of circumferentially spaced recesses coaxial with the spigot 18, one recess being positioned in-between each pair of circumferentially juxtaposed comers of the polygonal spigot 18 so as to collectively form the corners of a polygon 26 in which the spigot 18 would be a sliding fit.

## Description

This invention relates to the support and routing of cables, pipes and ducting and in particular to ladder-shaped racks used for this purpose. Such racks are known as cable ladders.

Although known designs of cable ladder perform well once they are installed, there are problems associated with their installation. The process of cutting each short transverse support, or rung, to the required length and welding them into position individually is time consuming and hence costly. This problem is exacerbated when the cable ladder is for use in a confined or hard-to-access space.

An object of this invention is to address this problem.

According to one aspect of this invention there is provided a method of manufacturing a cable ladder, comprising the steps of:
1) forming side rail lengths with spigots or sockets which each have either, in the case of a spigot, a polygonal external section or, in the case of a socket, a similar polygonal internal section of sufficient size so as to fully enclose the polygonal section of the spigot irrespective of their relative angular position, the spigots or sockets being fixed to the side rails at rung spacing intervals so that all the spigots or sockets project to one and the same side of the respective side rail length.
2) cutting rungs to length from tubing and forming each end of the rung into such a spigot or a socket, there being a rung end formed as a socket for mating with each spigot of each side rail length and a rung end formed as a spigot for mating with each socket of each side rail length;
3) fitting a collar of a resiliently deformable material into each socket, the collar being a tight fit into the socket and having an interior which comprises a circumferential array of angularly spaced recesses, the number of recesses being at least twice the number of corners of the polygon, one group of alternate recesses being sized so as to collectively form the corners of a polygon in which the spigot is a sliding fit and the other group of alternate recesses being sized so as to collectively form a polygon in which the spigot is an interference fit;
4) presenting each socket or spigot of the rung to a respective spigot or socket of the side rail so that the spigot is received within the one group of recesses of the collar with a sliding or clearance fit;
5) locking each socket to the respective spigot by turning the rung through an angle sufficient to relocate the comers of the polygon in the other group of recesses in which it is an interference fit.

According to another aspect of this invention there is provided means for supporting cables, pipes, ducting or any other such conduit, comprising two side rails arranged substantially in parallel and a plurality of rungs situated in-between the side rails and substantially at right angles to them so as to extend from one side rail to the other, wherein the rungs are attached to the side rails by means of a spigot and socket arrangement, each of the spigot and socket having a similar polygonal cross section, the socket being fitted with a collar of a resiliently deformable material in which the spigot is an interference fit and the collar comprising a plurality of circumferentially spaced recesses coaxial with the spigot, one recess being positioned in-between each pair of circumferentially juxtaposed comers of the polygonal spigot so as to collectively form the corners of a polygon in which the spigot would be a sliding fit.

Each spigot may be formed in one or each end of the respective rung and each socket may be formed in or attached to the respective side rail.

Each spigot may also be formed in or attached to the respective side rail and each socket may be formed in one or each end of the respective rung.

The spigot may comprise a raised portion, or nipple, on one or more of its external faces.

Where a first pair of side rails with rungs therebetween is situated substantially parallel to and adjacent a second pair of side rails with rungs therebetween, the side rail of the first pair that is closest to the second pair and the side rail of the second pair that is closest to the first pair may each be provided with a plurality of receiving means, each receiving means on one rail being situated substantially opposite a respective receiving means, each receiving means being arranged to receive and positively locate a respective end of a respective strut.

Each receiving means may be a bracket having a planar base portion with flanges projecting in a direction perpendicular to thereto. Such brackets are sometimes referred to as "u-shaped". The bracket may be welded to the respective side rail at an end of each flange further-most from the planar base portion. The planar base portion may include a screw thread formed in a hole, the hole and thread being arranged to receive a bolt such that the bolt is adjustable to exert a force on each end of the respective strut, thereby locating that strut relative to the bracket.

Another problem associated with known cable ladders concerns their efficient transportation. This is hampered by the cross section of the side rails, which is usually a u-section or channel section. The nature of such a cross section is such that any stacking of the rails is determined by the total external width and height of the cross section. The result is that for any given volume of stacked side rails, the majority of the enclosed volume will be air. This is an inefficient way of transporting any material.

Furthermore, the installation of known cable ladders usually necessitates joining several lengths of cable ladder in series to gain the required length of support. The nature of the aforementioned cross section is such that it precludes the side rails from being joined by overlapping and then securing juxtaposed side rails. Instead joining is effected by bolting an overlapping splice plate across the interface of each pair of juxtaposed side rails so as to secure the lengths of cable ladder in a nose-to-tail fashion.

According to a further aspect of this invention there is provided means for supporting cables, pipes, ducting or any other such conduit, comprising two side rails arranged substantially in parallel and a plurality of rungs situated in-between the side rails and substantially at right angles to them so as to extend from one side rail to the other, wherein at least one of the side rails has a planar web portion with flange reinforcement along at least one edge and no more than one flange extends from the web on either side of the web, thereby allowing stacking of a plurality of the or each side rail in a way that maximises space and that allows one length of side rail to be directly connected to another length of side rail by over-lapping a portion of the one length with a portion of the other length so as to give rise to an interface comprised of two mating surfaces.

One or each of the side rails may comprise holes formed at intervals along the length of the web, adapted to receive a bolt.

A specific embodiment of the present invention is now described by way of example and with reference to the accompanying drawings of which:
Figure 1 is a general assembly drawing of the preferred embodiment of this invention, with part of a rung being cut away to show hidden detail;
Figure 2 is a perspective view of three stacked side rails;
Figure 3 is a perspective view of a spigot and a rung;
Figure 4 is a front view of a collar in more detail; and
Figure 5 is a front view of two adjacent cable ladders and a strut.

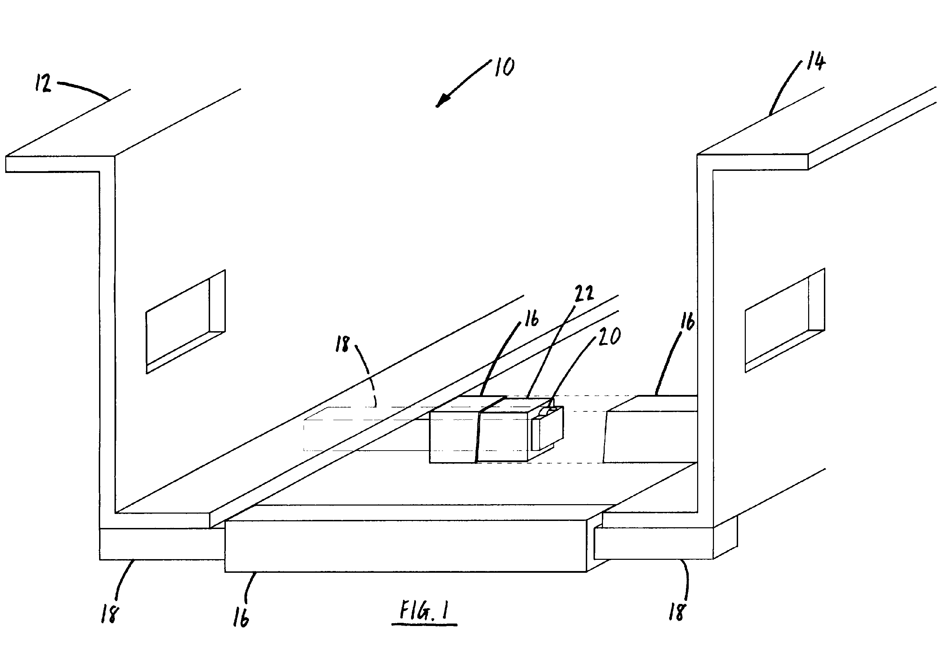

Figure 1 shows a cable ladder support system 10. The principal load bearing components of the system are two side rails 12 and 14 arranged in parallel to one another. These side rails 12,14 are manufactured from stainless steel and are formed so as to have a cross section comprised of a web with flanges along its edges, the flanges extending from the web in opposite directions and at 90 degrees to the web. Cut-outs 15 are formed at regular intervals along the length of the web in order to reduce weight and material cost.

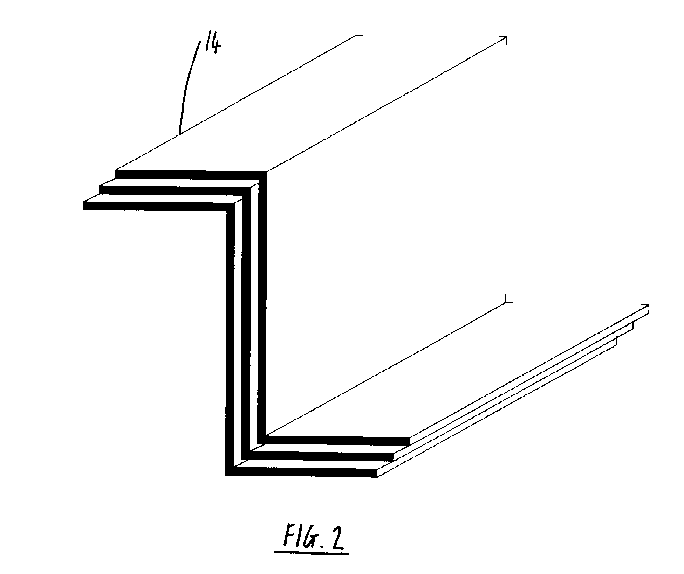

By employing such a cross section, transportation of the side rails prior to fabrication of the cable ladder support system 10 is facilitated. This is as a result of being able to stack the side rails 12,14 in the arrangement shown in Figure 2, thereby making the greatest use of any available space.

Affixed to the two side rails 12 and 14 are a number of rungs, only two 16 of which are shown in Figure 1. The rungs 16 are perpendicular to the side rails 12 and 14. Either end of each rung 16 fits onto a respective spigot 18. The spigots 18 are in turn attached to the side rails 12 and 14, the preferred method of attachment being welding.

To attain the required length of cable ladder, several side rails 12,14 may be joined together in a nose-to-tail arrangement. This is made possible by the cross section of the side rails which allows two juxtaposed side rails to be overlapped and then bolted together, using the cut-outs 15 as bolt holes. The method of overlapping is the same as that used for transportation and as shown in Figure 2.

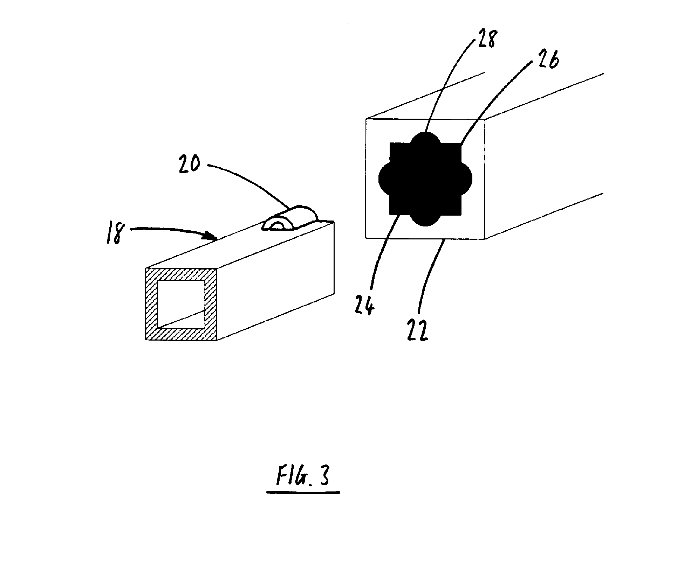

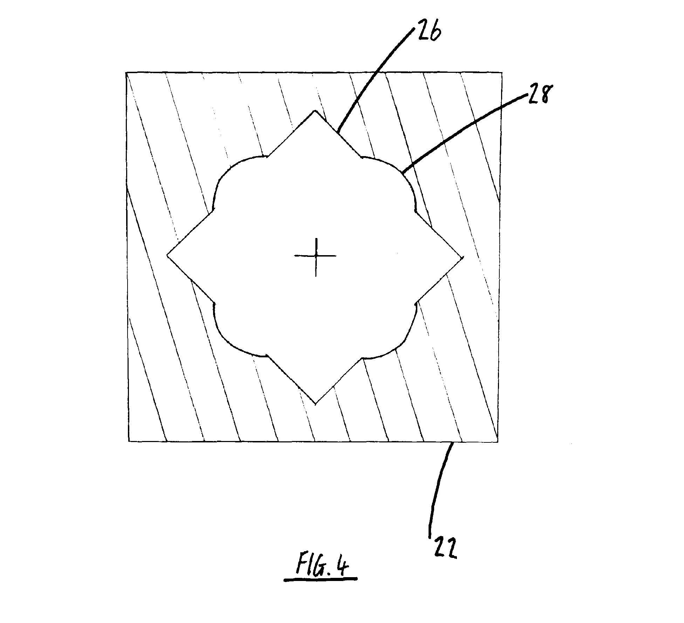

The mechanism by which each rung 16 is located onto the spigots 18 is shown in Figure 3. The spigot 18 is cut from a length of square box-section steel, but is adapted so as to have a rounded, raised portion, or nipple 20 , on one of its external faces. The rung 16 is also fashioned from square box-section steel, but is of a larger side dimension so that its internal side length is greater than the external diagonal dimension of the spigot 18. Plugging the inside of each end of the rung is a collar 22. This collar 22 is manufactured from a resiliently deformable material which has a hole of constant cross-section 24 running through its length. The cross section is formed by a number of circumferentially spaced recesses that are the corners of two notional, differently-shaped squares 26 and 28, arranged at 45 degrees to one another: the first square 26 having angular corners and being a clearance fit on the corners of the spigot 18; and the second square 28 having a slightly larger side length, but with more rounded corners to as to be an interference fit on the corners of the spigot 18. This is shown in detail in Figure 4.

To fit the rung 16 onto the spigot 18, the collar 22 is orientated relative to the spigot 18 in such a way that the square cross section of the spigot 18 lines up with the recesses in the collar 22 that constitute the first square 26, and the nipple 20 lines up with one of the recesses that constitute the second square 28. Insertion is then readily accomplished because the spigot 18 is a sliding fit inside the first square 26 and the nipple 20 is a sliding fit inside the second square 28. The spigot 18 is further inserted so as to push the nipple 20 through the entire length of the collar 22, causing the nipple 20 to protrude from it at the far end.

Securing the rung 16 onto the spigot 18 is accomplished by rotating the rung 16 through 45 degrees relative to the spigot 18. In so doing, the corners of the spigot 18 move from the clearance fit with the recesses of square 26 to an interference fit with the recesses of square 28. This interference fit hinders the axial movement of the rung 16 relative to the spigot 18 as a result of friction between the two components. Angular location is provided by the collar material in-between the recesses which, having some elastic properties, retains its shape and resists rotation of the spigot 18. The nipple 20 provides further axial location by acting as an end-stop against the collar 22. In the event that the friction between the spigot 18 and the collar 22 is overcome, the spigot 18 will abut the end of the collar 22 and be adjacent one of the corners of the first square 26. The nipple 20, being a sliding fit in the second square 28, is of slightly larger side length than the first square 26 and therefore will not pass readily through it. As a result, the rung 16 is locked into position. This arrangement is shown in Figure 1 where part of a rung 16 has been cut away to show a spigot 18 with nipple 20 protruding from a collar 22.

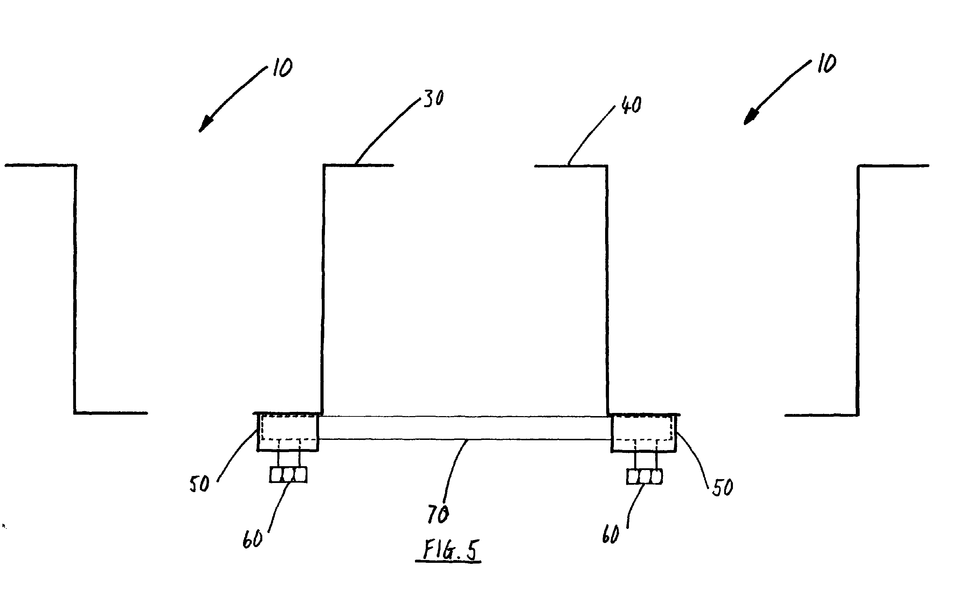

Figure 5 shows two of the cable ladder support systems 10 described above installed side-by-side and generally parallel. The rungs 16 and the spigots 18 of each cable ladder 10 have been omitted from Figure 5 for clarity. One side rail 30 of one of the cable ladders 10 is adjacent one side rail 40 of the other cable ladder 10. Each of the two side rails 30,40 has a number of u-shaped brackets 50 welded to it. It will be appreciated that such brackets 50 have a planar base portion with flanges projecting in a direction perpendicular thereto. The brackets 50 are welded to an underside of each of the rails 30,40 at an end of each flange that is further-most from the planar base portion. The brackets 50 are positioned so that each bracket 50 on the side rail 30 is opposite a respective bracket 50 on the side rail 40. The brackets 50 are therefore arranged in a number of opposite pairs. The brackets 50 are orientated such that they project in a direction perpendicular to that in which the rails 30, 40 project. Each bracket 50 includes a hole in its lower-most surface. The hole is threaded and receives a bolt 60.

A strut 70 is positioned in each pair of opposite brackets 50. One end of the strut 70 is located in one of the brackets 50 that makes up the pair and the other end of the strut 70 is located in the other bracket 50 that makes up the pair. With the respective bolt 60 withdrawn from each hole, the strut 70 is a clearance fit within the pair of brackets 50. When the respective bolt is screwed into each hole, the end of each bolt abuts material adjacent a respective end of the strut 70 and positively locates the strut 70 relative to the pair of brackets 50 and therefore to the rails 30,40.

Collectively, the struts 70 and the rails 30.40 constitute another cable support system, running parallel to, and in between, the first and the second cable support system 10.

## Claims

1. A method of manufacturing a cable ladder, comprising the steps of:
a) forming side rail lengths with spigots or sockets which each have either, in the case of a spigot, a polygonal external section or, in the case of a socket, a similar polygonal internal section of sufficient size so as to fully enclose the polygonal section of the spigot irrespective of their relative angular position, the spigots or sockets being fixed to the side rails at rung spacing intervals so that all the spigots or sockets project to one and the same side of the respective side rail length.
b) cutting rungs to length from tubing and forming each end of the rung into such a spigot or a socket, there being a rung end formed as a socket for mating with each spigot of each side rail length and a rung end formed as a spigot for mating with each socket of each side rail length;
c) fitting a collar of a resiliently deformable material into each socket, the collar being a tight fit into the socket and having an interior which comprises a circumferential array of angularly spaced recesses, the number of recesses being at least twice the number of comers of the polygon, one group of alternate recesses being sized so as to collectively form the comers of a polygon in which the spigot is a sliding fit and the other group of alternate recesses being sized so as to collectively form a polygon in which the spigot is an interference fit;
d) presenting each socket or spigot of the rung to a respective spigot or socket of the side rail so that the spigot is received within the one group of recesses of the collar with a sliding or clearance fit;
e) locking each socket to the respective spigot by turning the rung through an angle sufficient to relocate the corners of the polygon in the other group of recesses in which it is an interference fit.

2. Means for supporting cables, pipes, ducting or any other such conduit, comprising two side rails arranged substantially in parallel and a plurality of rungs situated in-between the side rails and substantially at right angles to them so as to extend from one side rail to the other, wherein the rungs are attached to the side rails by means of a spigot and socket arrangement, each of the spigot and socket having a similar polygonal cross section, the socket being fitted with a collar of a resiliently deformable material in which the spigot is an interference fit and the collar comprising a plurality of circumferentially spaced recesses coaxial with the spigot, one recess being positioned in-between each pair of circumferentially juxtaposed corners of the polygonal spigot so as to collectively form the corners of a polygon in which the spigot would be a sliding fit.

3. A method according to claim 1 or means according to claim 2, wherein each spigot is be formed in one or each end of the respective rung and each socket is be formed in or attached to the respective side rail.

4. A method according to claim 3 or means according to claim 3 wherein each spigot is also be formed in or attached to the respective side rail and each socket is formed in one or each end of the respective rung.

5. A method according to claim 4 or means according to claim 4 wherein the spigot comprises a raised portion, or nipple, on one or more of its external faces.

6. A method according to claim 1, or any one of claims 3 to 5, or means according to any one of claims 2 to 5 wherein one of the side rails comprises a plurality of receiving means each arranged to receive and positively locate a strut that is similarly received and positively located in receiving means of a third side rail positioned adjacent and parallel to one of the two side rails.

7. A method or means according to claim 6 wherein each receiving means is a bracket having a planar base portion with flanges projecting in a direction perpendicular thereto, the bracket being welded to the respective side rail at an end of each flange further-most from the planar base portion, and the planar base portion including a screw thread formed in a hole, the hole and thread being arranged to receive a bolt, the bolt being adjustable to exert a force on each end of the respective strut, thereby locating that strut relative to the bracket.

8. Means for supporting cables, pipes, ducting or any other such conduit, comprising two side rails arranged substantially in parallel and a plurality of rungs situated in-between the side rails and substantially at right angles to them so as to extend from one side rail to the other, wherein at least one of the side rails has a planar web portion with flange reinforcement along at least one edge and no more than one flange extends from the web on either side of the web, thereby allowing stacking of a plurality of the or each side rail in a way that maximises space and that allows one length of side rail to be directly connected to another length of side rail by over-lapping a portion of the one length with a portion of the other length so as to give rise to an interface comprised of two mating surfaces.

9. Means according to claim 6 wherein one or each of the side rails comprises holes formed at intervals along the length of the web, adapted to receive a bolt.
